**Europäisches Patentamt**

**European Patent Office**

**Office européen des brevets**

(19)

(11) Veröffentlichungsnummer : **0 343 219 B1**

(12) # EUROPÄISCHE PATENTSCHRIFT

(45) Veröffentlichungstag der Patentschrift :
03.03.93 Patentblatt 93/09

(51) Int. Cl.$^5$ : **C09D 161/06,** C09D 163/00

(21) Anmeldenummer : **89900056.6**

(22) Anmeldetag : **30.11.88**

(86) Internationale Anmeldenummer :
**PCT/AT88/00105**

(87) Internationale Veröffentlichungsnummer :
**WO 89/05333 15.06.89 Gazette 89/13**

(54) **VERWENDUNG EINES FESTEN PHENOL-FORMALDEHYDKONDENSATIONSPRODUKTES ALS HÄRTER IN EPOXYDHARZGEMISCHEN, SOWIE VERFAHREN ZUR HERSTELLUNG EINES PULVERLACKES AUS SOLCHEN EPOXYDHARZGEMISCHEN.**

(30) Priorität : **30.11.87 AT 3130/87**

(43) Veröffentlichungstag der Anmeldung :
**29.11.89 Patentblatt 89/48**

(45) Bekanntmachung des Hinweises auf die
Patenterteilung :
**03.03.93 Patentblatt 93/09**

(84) Benannte Vertragsstaaten :
**AT BE CH DE FR GB IT LI NL SE**

(56) Entgegenhaltungen :
**DE-B- 1 138 542**
**Patent Abstracts of Japan, Band 11, Nr. 365,**
**(C-460) (2812), 27. Nov. 1987 & JP, A, 62135574**
**(Nitto Electric Ind. Co. Ltd) 18. Juni 1987**
**Patent Abstracts of Japan, Band 9, Nr. 96,**
**(C-278) (1819), 25. April 1985 & JP, A, 59226067**
**(Sumitomo Durez K.K.) 19. Dez. 1984**

(73) Patentinhaber : **ISOVOLTA Österreichische**
**Isolierstoffwerke Aktiengesellschaft**
**Industriezentrum NÖ-Süd**
**A-2355 Wiener Neudorf (AT)**

(72) Erfinder : **EICHBERGER, Walter**
**Max-Margulesweg 14**
**A-2380 Perchtoldsdorf (AT)**
Erfinder : **JILEK, Josef, H.**
**Mariengasse 27**
**A-1170 Wien (AT)**

(74) Vertreter : **Stampfer, Heinz**
**c/o Isovolta Österreichische Isolierstoffwerke**
**Aktiengesellschaft**
**A-2355 Wiener Neudorf (AT)**

EP 0 343 219 B1

## Beschreibung

Verwendung eines festen Phenol-Formaldehydkondensationsproduktes als Härter in Epoxydharzgemischen, sowie Verfahren zur Herstellung eines Pulverlackes aus solchen Epoxydharzgemischen

### Technisches Gebiet

Die Erfindung betrifft die Verwendung eines bei Raumtemperatur festen Phenol-Formldehydkondensationsproduktes, dis im Durchschnitt mehr als zwei aromatische Hydroxylgruppen pro Molekül enthält, als Härter in Epoxydharzgemischen. Sie betrifft ferner ein Verfahren zur Herstellung eines Pulverlackes aus solchen Epoxydharzgemischen.

### Stand der Technik

Die Verwendung von bei Raumtemperatur festen Phenol-Formaldehydkondensationsprodukten, die im Durchschnitt mehr als zwei aromatische Hydroxylgruppen pro Molekül enthalten und demzufolge zum größten Teil aus Novolaken bestehen, ist aus der AT-PS 225426 bekannt, die Preßmassen beschreibt, die zum Beispiel einen Phenolnovolakpolyglycidyläther und einen als Härter wirkenden Phenolnovolak als Harzkomponenten enthalten.

Epoxydharzgemische, die epoxydierte Novolake enthalten, sind außerdem als Basis von Epoxydharz-Pulverlacken bekannt. Solche Pulverlacke werden z.B. für Innen - und Außenbeschichtungen als Korrosionsschutz an Stahlteilen verwendet und haben eine hohe Lösungsmittel- und Chemikalienbeständigkeit. Solche Beschichtungen sind dabei im allgemeinen aber umso spröder, je höher ihre Chemikalienbeständigkeit ist.

Patent Abstracts of Japan, Band 11, Nr. 365 (I-460), (2812), 1987 offenbart eine Pulverlackmischung auf Basis eines Epoxidharzes sowie zweier Härtungsmittel (lineares Phenolharz mit 2 endständigen Hydroxylgruppen und 4-N,N-Dialkylaminopyridin). Patent Abstracts of Japan, Band 9, Nr. 96 (I-178) (1819), 1985 offenbart eine Mischung eines reaktionsträgen Epoxyharzes mit einem reaktionsfreudigen Novolak-Phenolharz, wobei das Epoxyharz ein Epoxyäquivalent von 180-450 und einem Schumelzpunkt von 40-150°C aufweist, während das Novolak-Phenolharz ein Hydroxyäquivalent von 100-250 sowie einen Schumelzpunkt von 50-120°C besitzt.

### Darstellung der Erfindung

Der Erfindung liegt nun zunächst die Aufgabe zugrunde, eine vorteilhafte Verwendung des eingangs der Beschreibung genannten Phenol-Formaldehydkondensationsproduktes als Härter für Epoxydharzgemische anzugeben, insbesondere für solche, die als Basis für einen Pulverlack dienen, wobei am Endprodukt, insbesondere also beim Pulverlack, bei etwa gleichen mechanischen Eigenschaften wie bei bekannten ähnlichen pulverlacken die Chemikalienbeständigkeit verbessert wird.

Diese der Erfindung zugrunde liegende Aufgabe wird in der erfindungsgemäßen Verwendung dadurch gelöst, daß das verwendete feste Phenol-Formaldehydkondensationsprodukt einen Koflerschmelzpunkt von höher als 75°C, vorzugsweise jedoch von höher als 80°C, und einen mittels DSC bestimmten Glasumwandlungspunkt von höher als 55°C, vorzugsweise jedoch von höher als 60°C, aufweist und ein Hydroxyäquivalent im Bereich von 100-110 besitzt und daß es als Härter für ein zumindest zum größten Teil aus einem bifunktionellen Epoxydharz bestehendes Epoxydharz mit einem Epoxydäquivalentgewicht im Bereich zwischen 500 bis 2500 verwendet wird. Dabei kann der erfindungsgemäße Härter vorteilhaft im wesentlichen frei von Phenol (Monohydrobenzol) sein.

In einer vorteilhaften Ausgestaltung der erfindungsgemäßen Verwendung ist das als Härter verwendete Phenol-Formaldehydkondensationsprodukt eines, dessen Herstellung in zwei Stufen erfolgt, wobei man in der ersten Stufe Phenol und Formaldehyd in einer wässrigen Lösung im Molverhältnis Phenol:Farmaldehyd im Bereich von etwa 1:0,3 bis 1:0,7 versetzt, durch Zugabe einer flüchtigen Säure ein saures Milieu einstellt und das Ganze bis zum Abschluß der Kondensationsreaktion auf einer erhöhten Temperatur hält. daß man danach - in einer zweiten Stufe - dem Reaktionsprodukt der ersten Stufe, das zu einem geringen Teil aus Phenol und sonst überwiegend aus Dihydroxydiphenylmethan besteht, Formaldehyd in einer Menge zusetzt, so daß das Molverhältnis aus in der ersten Stufe eingesetztes Phenol: Gesamtmenge des in beiden Stufen eingesetzten Formaldehyds in etwa im Bereich von 1:0,6 bis 1:0,95 liegt, und man die Kondensationsreaktion bei erhöhter Temperatur fortsetzt und beendet, und daß man das Kondensationsprodukt vom Wasser abtrennt und außerhalb des Reacktionskessels erstarren läßt und zerkleinert. Dabei kann vorteilhaft nach Beendigung der Kondensationsreaktion und der Entfernung des Wassers das noch verbliebene Phenol (Monohydroxybenzol) durch Wasserdampfdestillation zumindest zum größten Teil entfernt werden.

Gemäß einer weiteren vorteilhaften Ausgestaltung der Erfindung wird das Phenol-Formaldehydkondensationsprodukt als Härter in einem Epoxydharz-Pulverlack verwendet.

Die Erfindung betrifft schließlich ein Verfahren zur Herstellung eines Epoxydharz-Pulverlackes mit der erfindungsgemäßen Härter-Verwendung, das dadurch gekennzeichnet ist, daß das als Härter verwendete feste Phenol-Formaldehydkondensationsprodukt mit dem Epoxydharz und gegebenenfalls den anderen Komponenten der Pulvernarzformulierung in Form einer Schmelze extrudiert, das Extrudat abgekühlt und durch Mahlen den Pulverlack übergeführt wird.

Die Anmelderin hat nun gefunden, daß Beschichtungen, die aus dem erfindungsgemäß hergestellten Pulverlack bestehen, bei etwa gleich hoher Zähigkeit (Sprödigkeit) eine höhere Chemikalienbeständigkeit aufweisen als die bekannten Beschichtungen aus einem Pulverlack auf Basis eines epoxydierten Novolaks. Außerdem hat sich gezeigt, daß die Schmelzpunkte der erfindungsgemäß hergestellten Pulverlacke nicht unwesentlich höher liegen können als bei den genannten bekannten Pulverlacken mit epoxydierten Novolaken. Dies hat den Vorteil, daß bei der Lagerung und/ oder dem Transport eines solchen Pulverlackes die Gefahr eines Zusammenbackens des Lack-Pulvers weniger groß ist als bei den genannten bekannten Pulverlacken.

Außerdem ist der Pulverlack, wenn der in ihm verwendete Härter im wesentlichen frei von Phenol (Monohydroxybenzol) ist, besonders zur Herstellung von Beschichtungen geeignet, die mit Lebens- oder Genußmitteln in Berührung kommen.

Ein Weg zur Ausführung der Erfindung

Zur Herstellung des Phenol-Formaldehyd-Kondensationsprodukts mischt man 10 Mol Phenol (Monohydroxybenzol), 5 Mol 37%ige wässrige Lösung Formaldehyd und 0,01 Mol konz. Salzsäure bei 20-30°C zusammen. Die Mischung wird anschließend auf Rückflußtemperatur (100-102°C) erwärmt, welche 60 Minuten lang zu halten ist. Die am Anfang klar gewordene Mischung wird nach ca. 20 Minuten trüb, wobei sich das Gemisch in eine Wasserschicht und eine Harzschicht trennt. Nach der Kondensation destilliert man das Wasser so weit ab, bis die Temperatur auf 120°C steigt. Das so entwässerte Produkt wird auf 70°C abgekühlt.

Das so hergestellte Zwischenprodukt wird mit weiteren 3 Mol einer 37%igen wässrigen Lösung Formaldehyd und 0,01 Mol konz. Salzsäure vermischt und unter Rückfluß weitere 1 1/2 Stunden kondensiert. Nach der Kondensation destilliert man das Wasser unter Vakuum ab, bis das Produkt weitgehend wasserfrei ist und die Harzschmelze eine Temperatur von 150°C erreicht hat. Das so entwässerte Produkt wird in eine Blechwanne abgefüllt, erstarren gelassen und schließlich zerkleinert.

Dieses als Härter für Epoxydharze einzusetzende Produkt hat einen Koflerschmelzpunkt von 85°C und einen Glasumwandlungspunkt (gemessen mittels DSC) von 62°C und ein Hydroxyäquivalent von 105.

Nachstehend sei die Herstellung von zwei verschiedenen Pulverlack-Formulierungen angegeben, bei denen ein wie vorstehend beschrieben hergestelltes Phenol-Formaldehydkondensationsprodukt als Härter verwendet wird. Bei diesen Formulierungen kommen drei verschiedene handelsübliche Epoxydharze zum Einsatz, die jeweils Bisphenol A-Epichlorhydrin-Epoxydharze sind, nämlich

| Harz-typ | Erzeuger | Epoxy-äquivalentgew. | Zusatz |
|---|---|---|---|
| XV 302 | Ciba-Geigy | 610 - 680 | Verlaufmittel zusatz |
| XB 2874 | Ciba-Geigy | 750 - 850 | hoher Verlauf mittelzusatz |
| DER 664U | Dow Chemical | 880 - 970 | kein Verlauf mittelzusatz |

Die beiden Pulverlacke bestehen nun aus den Formulierunger ; und II mit folgenden Komponenten:

3

| Komponenten | I<br>Gew. Teile | II<br>Gew. Teile |
|---|---|---|
| XV 302 | -- | 1204 |
| DER 664U | 1048 | -- |
| XB 2874 | 184 | -- |
| Härter | 168 | 250 |
| Bariumsulfat<br>als Pigment | 300 | 300 |
| Eisenoxydrot<br>als Pigment | 287 | 287 |
| Aerosil R 972<br>der Firma Degussa<br>als Tixotropierungsmittel | 10 | 10 |
| 2-Methylimidazol<br>als Beschleuniger | 3 | 3 |

Zur Herstellung der Pulverlacke werden die Komponenten der Formulierungen in Form von Schmelzen extrudiert, die Extrudate abgekühlt und durch Mahlen in Pulverlacke übergeführt.

Für Testzwecke werden die Pulverlacke nun elektrostatisch auf kaltgewalzte Stahlbleche aufgetragen und während 10 min bei 200°C ausgehärtet. Diese Probelackierungen hatten nun folgende Eigenschaften.

| | I | II |
|---|---|---|
| Erichsen Biegbarkeit | 6,7 mm | 6,1 mm |
| Schlagfestigkeit (revers)<br>inchpounds | 23 cm.kg | 23 cm.kg |
| 1 min Einwirkungen von<br>Methyl-Äthyl-Keton | keine Wirkung | keine Wirkung |
| 5 min Einwirkungen von<br>N-Methylpyrrolidon | leicht matt | keine Wirkung |
| Tg (DSC) | 112,6°C | 113,0°C |

Nachstehend sei nun eine Vergleichsformulierung angegeben, bei der u.a. eingesetzt werden
- ein Epoxydharz auf Basis von Bisphenol A modifiziert mit epoxydiertem Novolak, Type DER 642U der Firma Dow Chemical mit einem Epoxydäquivalentgewicht von 500 bis 570 und ein
- phenolischer Härter, Type DEH 81 der Firma Dow Chemical mit einem Hydroxyäquivalentgewicht von 250 und einer Koflerschmelzpunkt von 67°C und zwar

4

|  | Gew. Teile |
|---|---|
| DER 642U | 818 |
| XB2874 | 142 |
| DEH81 (Härter) | 438 |
| Bariumsulfat | 300 |
| Eisenoxydrot | 290 |
| Aerosil R 972 | 10 |

Probelackierungen mit einem aus dieser Formulierung hergestellten Pulverlack hatten folgende Eingenschaften:

| Erichsen Biegbarkeit | 6.7 mm |
|---|---|
| Schlagfestigkeit (revers) | **23 cm.kg** |
| 1 min Einwirkung von Methyl-Äthyl-Keton | leicht matt |
| 5 min Einwirkung von N-Methylpyrrolidon | zerstört |
| Tg (DSC) | 104.0°C |

Man sieht also, daß bei etwa gleichen mechanischen Eigenschaften der Lackierung, welche durch die Werte der Erichsen Biegbarkeit bzw. der Schlagfestigkeit (revers) gekennzeichnet ist, bei dem übliche Pulverlack gemäß der Vergleichsformulierung eine nicht unwesentlich geringere Chemikalienbeständigkeit erzielt wird, als bei den beiden Formulierungen I und II des unter der erfindungsgemäßen Härter-Verwendung hergestellten Pulverlackes. Außerdem sind bei den Formulierungen I und II die Werte des Glasumwandlungspunktes Tg (DSC) niedriger als bei der Vergleichsformulierung.

Schließlich wird noch darauf hingewiesen, daß bei dem erfindungsgemäß verwendeten Härter der Koflerschmelzpunkt beträchtlich höher liegt, als bei den in Frage kommenden bekannten phenolischen Härtern, was, da auch der Härter ein Handelsprodukt ist, den Vorteil hat, daß er bei Transport und Lagerung weniger zum Zusammenbacken neigt.

Bei einer Variante zur Härterherstellung wird nach Beendigung der Kondensationsreaktion und der Vakuumdestillation in der zweiten Verfahrensstufe die heiße Harzschmelze einer Wasserdampfdestillation unterzogen, bei der das noch in der Harzschmelze verbleibende Phenol weitgehend entfernt wird.

Gewerbliche Verwertbarkeit

Aus den mit der erfindungsgemäßen Härter-Verwendung hergestellten Epoxydharzgemischen können Epoxydharzpulverlacke hergestellt werden, die, bei gleich guten mechanischen Eigenschaften wie bei bekannten Pulverlacken, eine höhere Chemikalienbeständigkeit als diese haben. Diese neuen Pulverlacke werden z.B. für Innen- und Außenbeschichtungen als Korrosionsschutz an Stahlteilen, wie an Armaturen oder Rohren verwendet.

**Patentansprüche**

1. Verwendung eines bei Raumtemperatur festen Phenol-Formaldehydkondensationsproduktes, das im Durchschnitt mehr als zwei aromatische Hydroxylgruppen pro Molekül enthält, als Härter in Epoxydharzgemischen, dadurch gekennzeichnet, daß das verwendete, feste Phenol-Formaldehydkondensationsprodukt einen Koflerschmelzpunkt von höher als 75°C und einen mittels DSC bestimmten Glasumwandlungspunkt von höher als 55°C aufweist und ein Hydroxyäquivalent im Bereich von 100-110 besitzt und daß es als Härter für ein zumindest zum größten Teil aus einem bifunktionellen Epoxydharz bestehendes Epoxydharz mit einem Epoxydäquivalentgewicht im Bereich zwischen 500 bis 2500 verwendet wird.

2. Verwendung nach Anspruch 1, dadurch gekennzeichnet, daß das als Härter verwendete feste Phenol-Formaldehydkondensationsprodukt einen Koflerschmelzpunkt von höher als 80°C sowie einen mittels DSC bestimmten Glasumwandlungspunkt von höher als 60°C aufweist.

3. Verwendung nach Anspruch 1 oder 2, dadurch gekennzeichnet, daß das als Härter verwendete Phenol-Formaldehydkondensationsprodukt im wesentlichen frei von Phenol (Monohydroxybenzol) ist.

4. Verwendung nach einem der Ansprüche 1 bis 3, dadurch aegekennzeichnet, daß das als Härter verwendete Phenol-Formaldehydkondensationsprodukt eines ist, dessen Herstellung in zwei Stufen erfolgt ist, wobei man in der ersten Stufe in einer wässerigen Lösung im Molverhältnis Phenol und Formaldehyd im Bereich vor 1:0,3 bis 1:0,7 versetzt, durch Zugabe einer Säure ein saures Milieu einstellt und das Ganze bis zum Abschluß der Kondensationsreaktion auf einer erhöhten Temperatur hält, daß man danach - in einer zweiten Stufe - dem Reaktionsprodukt der ersten Stufe, das zu einem geringen Teil aus Phenol und sonst überwiegend aus Dihydroxydiphenylmethan besteht, Formaldehyd in einer Menge zusetzt, so daß das Molverhältnis aus in der ersten Stufe eingesetztem Phenol zur Gesamtmenge des in beiden Stufen eingesetzten Formaldehyds im Bereich von 1: 0,6 bis 1:0,95 liegt und man die Kondensationsreaktion bei erhöhter Temperatur fortsetzt und beendet, und daß man das Kondensationsprodukt vom Wasser abtrennt und außerhalb des Reaktionskessels erstarren läßt und zerkleinert.

5. Verwendung nach Anspruch 4, dadurch gekennzeichnet, daß nach Beendigung der Kondensationsreaktion und der Entfernung des Wassers das noch verbliebene Phenol (Monohydroxybenzol) aus der Harzschmelze durch Wasserdampfdestillation zumindest zum größten Teil entfernt wird.

6. Verwendung nach einem der Ansprüche 1 bis 5, dadurch gekennzeichnet, daß das Phenol-Formaldehydkondensationsprodukt als Härter in einem Epoxydharz-Pulverlack verwendet wird.

7. Verfahren zum Herstellen eines Epoxydharz-Pulverlackes mit einer Härter-Verwendung gemäß Anspruch 6, dadurch gekennzeichnet, daß das als Härter verwendete feste Phenol-Formaldehydkondensationsprodukt mit dem Epoxydharz und gegebenenfalls den anderen Komponenten der Pulverharzformulierung in Form einer Schmelze extrudiert, das Extrudat abgekühlt und durch Mahlen in den Pulverlack übergeführt wird.

## Claims

1. The use of a phenol-formaldehyde condensation product which is solid at room temperature and which on average contains more than two aromatic hydroxyl groups per molecule, as a hardener in epoxy resin mixtures, characterised in that the solid phenol-formaldehyde condensation product used has a Kofler melting point of more than 75°C and a glass transition temperature, determined by DSC, of more than 55°C and has a hydroxy equivalent in the range of 100 - 110 and that it is used as a hardener for an epoxy resin consisting at least predominantly of a bifunctional epoxy resin and having an epoxide equivalent weight in the range of 500 to 2500.

2. The use according to claim 1, characterised in that the solid phenol formaldehyde condensation product used as a hardener has a Kofler melting point of more than 80°C and a glass transition temperature, determined by means of DSC, of more than 60°C.

3. The use according to claim 1 or 2, characterised in that the phenol formaldehyde condensation product used as hardener is substantially free of phenol (monohydroxybenzene [sic]).

4. The use according to one of claims 1 to 3, characterised in that the phenol-formaldehyde condensation product used as a hardener is one which has been produced in two stages, in the first stage phenol and formaldehyde being mixed in an aqueous solution in a molar ratio of 1:0.3 to 1:0.7, an acidic medium being set by adding an acid and the entire mixture being kept at elevated temperature until the condensation reaction has finished, that thereafter - in a second stage - formaldehyde is added to the reaction product of the first stage, which consists of a small proportion of phenol and otherwise predominantly of dihydroxydiphenylmethane, in a quantity such that the molar ratio of the phenol used in the first stage to the total quantity of the formaldehyde used in the two stages is in the range of 1:0.6 to 1:0.95, and the condensation reaction is continued at elevated temperature and is terminated, and that the condensation product is separated from water and is allowed to solidify outside the reaction vessel and is crushed.

5. The use according to claim 4, characterised in that once the condensation reaction has ended and the water has been removed at least the major part of the remaining phenol (monohydroxybenzene) is removed from the molten resin by steam distillation.

6. The use according to one of claims 1 to 5, characterised in that the phenol-formaldehyde condensation product is used as a hardener in an epoxy resin powder coating.

7. A method for producing an epoxy resin powder coating with the use of a hardener according to claim 6, characterised in that the solid phenol-formaldehyde condensation product used as hardener is extruded with the epoxy resin and optionally the other constituents of the powder resin formulation in the form of a melt, the extrudate is cooled and is converted into the powder coating by grinding.

**Revendications**

1. Utilisation d'un produit de condensation phénolformaldéhyde solide à température ambiante, qui contient en moyenne plus de deux groupes hydroxyles aromatiques par molécule, en tant qu'agent durcisseur pour des mélanges de résines époxy, caractérisé en ce que le produit de condensation phénol-formaldéhyde solide utilisé présente un point de fusion mesuré sur banc Kofler supérieur à 75°C et une température de transition vitreuse mesurée par DSC supérieure à 55°C et possède un nombre d'équivalent hydroxy de 100 à 110, et en ce qu'il est utilisé en tant qu'agent durcisseur pour une résine époxy constituée au moins en majeure partie d'une résine époxy bifonctionnelle ayant un poids exprimé en équivalent époxy compris entre 500 et 2 500.

2. Utilisation selon la revendication 1, caractérisée en ce que le produit de condensation phénol-formaldéhyde solide utilisé en tant qu'agent durcisseur présente un point de fusion mesuré sur banc Kofler supérieur à 80°C et une température de transition vitreuse mesurée par DSC supérieure à 60°C.

3. Utilisation selon la revendication 1 ou 2, caractérisée en ce que le produit de condensation phénol-formaldéhyde solide utilisé en tant qu'agent durcisseur est substantiellement exempt de phénol (monohydroxybenzène).

4. Utilisation selon l'une des revendications 1 à 3, caractérisé en ce que le produit de condensation phénol-formaldéhyde utilisé en tant qu'agent durcisseur est obtenu par un procédé en deux étapes, dans lequel, dans la première étape, on mélange dans une solution aqueuse du phénol et du formaldéhyde selon un rapport molaire compris entre 1/0,3 et 1/0,7, on ajuste par addition d'un acide d'un milieu acide, on maintient le tout à une température élevée jusqu'à la fin de la réaction de condensation, et dans lequel ensuite -dans la seconde étape- on ajoute au produit de la réaction de la première étape, constitué d'une faible partie de phénol et principalement de dihydroxydiphénylméthane, du formaldéhyde en une quantité telle que le rapport molaire phénol utilisé dans la première étape/formaldéhyde utilisé dans les deux étapes est compris entre 1/0,6 et 1/0,95, et on continue et termine la réaction à température élevée, et on sépare le produit de condensation de l'eau et, en outre, on laisse le contenu du récipient de réaction se solidifier et on le broie.

5. Utilisation selon la revendication 4, caractérisée en ce que le phénol (monohydroxybenzène) encore restant après la fin de la réaction de condensation et séparation de l'eau est séparé de la masse de résine en fusion par distillation avec de la vapeur d'eau, au moins en majeure partie.

6. Utilisation selon l'une quelconque des revendications 1 à 5, caractérisée en ce que le produit de condensation phénol-formaldéhyde est utilisé en tant qu'agent durcisseur dans une laque à base de poudre de résine époxy.

7. Procédé de préparation d'une laque à base de poudre de résine époxy, avec utilisation d'un agent durcisseur selon la revendication 6, caractérisé en ce que le produit de condensation phénol-formaldéhyde solide utilisé en tant qu'agent durcisseur est extrudé à l'état de fusion avec la résine époxy et éventuellement les autres composants de la formulation de la résine en poudre, l'extrudat est refroidi et transformé en laque à base de poudre par broyage.